# EUROPÄISCHE PATENTSCHRIFT

(11) **EP 1 578 835 B1**
(45) Veröffentlichungstag und Bekanntmachung des Hinweises auf die Patenterteilung: **01.08.2012**
(21) Anmeldenummer: 03782321.8
(22) Anmeldetag: 06.12.2003
(51) Int. Cl.: C08G 18/80, C08G 18/81, C09D 175/16

(54) **NEUE DUAL CURE-SYSTEME**
NOVEL DUAL CURE SYSTEMS
NOUVEAUX SYSTEMES A DOUBLE DURCISSEMENT

(30) Priorität: 20.12.2002 DE 10260269
(43) Veröffentlichungstag der Anmeldung: 28.09.2005
(73) Patentinhaber: Bayer MaterialScience AG, 51368 Leverkusen (DE)
(72) Erfinder: WEIKARD, Jan, 51519 Odenthal (DE); GÜRTLER, Christoph, 50676 Köln (DE); FISCHER, Wolfgang, 40668 Meerbusch (DE); RAPPEN, Diethelm, 47495 Rheinberg (DE); SCHELHAAS, Michael, 50733 Köln (DE)
(86) Internationale Anmeldenummer: PCT/EP2003/013829
(87) Internationale Veröffentlichungsnummer: WO 2004/058848

(56) Entgegenhaltungen:
- EP-A- 0 126 359
- EP-A- 1 375 548
- WO-A-01/42329
- WO-A-03/004545

## Beschreibung

Die vorliegende Erfindung betrifft neue Dual Cure Systeme und Polyisocyanat-Vemetzer, ein Verfahren zu ihrer Herstellung und ihre Verwendung.

Beschichtungsmittel, die durch zwei unabhängige Prozesse aushärten, werden allgemein als Dual Cure-Systeme bezeichnet. Üblicherweise besitzen die enthaltenen Bindemittelkomponenten dabei unterschiedliche funktionelle Gruppen die unter geeigneten Bedingungen i.d.R. unabhängig voneinander miteinander vernetzen. Übliche zum Stand der Technik gehörende Dual Cure-Systeme besitzen strahlen- sowie thermisch härtbare Gruppen, wobei besonders vorteilhafte Eigenschaften bei Verwendung von Isocyanat- und Hydroxygruppen als thermisch vernetzende Funktionen erhalten werden.

EP-A 0 928 800 beschreibt ein Dual Cure-System, das einen Vernetzer enthält, der sowohl strahlenhärtbare Acrylatgruppen als auch Isocyanatgruppen enthält, die mit geeigneten, z.B. OH-gruppenhaltigen Bindemittel thermisch ausgehärtet werden können. Da NCO- und OH-Gruppen bereits bei Raumtemperatur miteinander reagieren, kann das vorgenannte Beschichtungssystem nur als zwei Komponentensystem gehandhabt werden, bei dem NCO-haltige und NCO-reaktive Bestandteile kurz vor oder beim Beschichturigsvorgang miteinander vermischt werden. Der Nachteil einer nur sehr kurzen Verarbeitungszeit dieser Systeme kann durch Blockierung der freien NCO-Gruppen beseitigt werden. Die Kombination solcher strahlen- und hitzehärtbaren Systeme, die blockierte Isocyanatgruppen enthalten, ist beispielsweise in EP-A-126 359, WO-A 01/42329 oder US-A 4 961 960 beschrieben.

Bei den meisten zum Stand der Technik gehörenden blockierten Polyisocyanaten werden die enthaltenen Blockierungsmittel bei der Vernetzungsreaktion abgespalten und anschließend freigesetzt. Dies wirkt sich einerseits negativ auf den VOC-Gehalt der Beschichtungssysteme aus, andererseits verbleibt abgespaltenes Blockierungsmittel im Lackfilm, wodurch die Eigenschaften der Beschichtung negativ beeinflusst werden. Daher sind Kratzfestigkeit und Säurestabilität von Einkomponenten-(1K)-Lackfilmen in der Regel deutlich schlechter als bei Zweikomponenten-(2K)-Polyurethan Lackierungen (z.B. T. Engbert, E. König, E. Jürgens, Farbe & Lack, Curt R. Vincentz Verlag, Hannover 10/1995). Die Abspaltung des Blockierungsmittels und dessen gasförmiges Entweichen aus dem Lackfilm kann darüber hinaus zur Blasenbildung im Lack führen. Gegebenenfalls kann eine Nachverbrennung des emittierten Blockierungsmittels notwendig werden.

Für besonders niedrige Vernetzungstemperaturen im Bereich von 90 bis 120°C finden neuerdings Malonsäuredieethylester blockierte Isocyanate Verwendung (z.B. EP-A 0 947 531). Im Gegensatz zu Blockierungen mit z.B. N-heterocyclischen Verbindungen, wie Caprolactam oder Butanonoxim, wird hierbei nicht das vollständige Blockierungsmittel abgespalten, sondern es kommt beim Aushärten zu einer Umesterung am Malonsäurediethylester unter Abspaltung von Ethanol. Nachteilig ist allerdings, dass solche Systeme aufgrund der labilen Esterbindung äußerst anfällig gegen Säureeinwirkung sind, so dass die Anwendungsmöglichkeiten dieser Produkte eingeschränkt sind.

Es wurde nun gefunden, dass zur Blockierung von Isocyanatgruppen CH-azide Verbindungen mit der Grundstruktur eines aktivierten cyclischen Ketons besonders gut geeignet sind, um abspalterfrei reagierende lagerstabile Dual Cure Systeme zu erhalten.

Gegenstand der Erfindung sind organische Polyisocyanate, die mindestens eine ungesättigte funktionelle Gruppe aufweisen, die unter Einwirkung aktinischer Strahlung mit ethylenisch ungesättigten Verbindungen unter Polymerisation reagiert und Struktureinheiten der Formel (1) 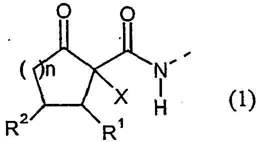 aufweisen, in welcher
- X: eine elektronenziehende Gruppe ist,
- R¹, R²: unabhängig voneinander ein Wasserstoffatom, ein gesättigter oder ungesättigter aliphatischer oder cycloaliphatischer, ein gegebenenfalls substituierter aromatischer oder araliphatischer Rest sind und je bis zu 12 Kohlenstoffatome und gegebenenfalls bis zu 3 Heteroatome der Elemente Sauerstoff, Schwefel, Stickstoff enthalten und gegebenenfalls durch Halogenatome substituiert sind und
- n: eine ganze Zahl von 0 bis 5 ist.

Ein weiterer Gegenstand der Erfindung ist Verfahren zur Herstellung der erfindungsgemäßen Polyisocyanate bei dem
A1)ein oder mehrere organische Polyisocyanate mit,
A2) einer oder mehreren Verbindungen, die mindestens eine isocyanatreaktive Gruppe aufweisen und mindestens eine unter Einwirkung aktinischer Strahlung mit ethylenisch ungesättigten Verbindungen unter Polymerisation reagierende Gruppe enthalten,
A3) ggf. weiteren isocyanatreaktiven Verbindungen und
A4) Blockierungsmitteln enthaltend mindestens ein CH-azides cyclisches Keton der allgemeinen Formel (2), 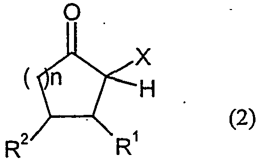 in welcher
   - X: eine elektronenziehende Gruppe ist,
   - R¹, R²: unabhängig voneinander ein Wasserstoffatom, ein gesättigter oder ungesättigter aliphatischer oder cycloaliphatischer, ein gegebenenfalls substituierter aromatischer oder araliphatischer Rest sind und je bis zu 12 Kohlenstoffatome und gegebenenfalls bis zu 3 Heteroatome der Elemente Sauerstoff, Schwefel, Stickstoff enthalten und gegebenenfalls durch Halogenatome substituiert sind und
   - n: eine ganze Zahl von 0 bis 5 ist,
A5) in Anwesenheit eines oder mehrerer Katalysatoren und
A6) ggf. Hilfs- und Zusatzstoffen sowie
A7) ggf. Lösemitteln
miteinander umgesetzt werden.

Unter isocyanatreaktiven Gruppen im Sinne der Erfindung werden alle Funktionalitäten verstanden, die mit NCO-Funktionen spontan oder unter Temperatureinwirkung von 0 - 200°C ggf. unter Beschleunigung mit dem Fachmann aus der Polyurethanchemie bekannten Katalysatoren reagieren. Beispielsweise sind dies: Hydroxyl-, Amino-, Asparaginato-, Thiolgruppen und auch solche Systeme, die β-Aminoalkohole enthalten, wie z.B. Tetrakishydroxyethylen-ethylendiamin oder auch Dialkylaminoethanol oder Aminoethanol. Bevorzugt sind Hydroxylgruppen.

Unter aktinischer Strahlung wird elektromagnetische, ionisierende Strahlung verstanden, insbesondere Elektronenstrahlen, UV-Strahlen sowie sichtbares Licht (Roche Lexikon Medizin, 4.Auflage; Urban & Fischer Verlag, München 1999).

Zur Herstellung der erfindungsgemäßen Polyisocyanate können als Komponente A1) alle organischen Isocyanatgruppen-aufweisende Verbindungen, bevorzugt aliphatische, cycloaliphatische, aromatische oder heterocyclische Polyisocyanate einer NCO-Funktionalität ≤ 2, einzeln oder in beliebigen Mischungen untereinander verwendet werden, wobei es unerheblich ist, ob diese durch Phosgenierung oder nach phosgenfreien Verfahren hergestellt wurden.

Ebenfalls gut geeignet sind Polyisocyanate mit Uretdion-, Carbodiimid-, Isocyanurat-, Iminooxadiazindion-, Biuret-, Urethan-, Allophanat-, Oxadiazintrion oder Acylharnstoff-Strukur sowie Polyisocyanatprepolymere einer mittleren NCO-Funktionalität > 1, wie sie werden durch Vorreaktion eines molaren Überschusses eines der obengenannten Polyisocyanate, mit einem organischen Material erhalten werden, das mindestens zwei isocyanatreaktive Wasserstoffatome pro Molekül, z.B. in Form von OH-Gruppen, aufweist.

Im Sinne der Erfindung werden in A1) bevorzugt Verbindungen der vorstehend genannten Art mit einem Molekulargewicht von 140 bis 400 g/mol mit aliphatisch, cycloaliphatisch, araliphatisch und/oder aromatisch gebundenen Isocyanatgruppen eingesetzt.

Beispiele für aliphatische und cycloaliphatische Isocyanate der Komponente A1) sind 1,4-Diisocyanatobutan, 1,5-Diisocyanatopentan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan (Desmodur^{®} W, Bayer AG, Leverkusen), 4-Isocyanatomethyl-1,8-octandiisocyanat (Triisocyanatononan, TIN), ω,ω'-Diisocyanato-1,3-dimethylcyclohexan (H₆XDI), 1-Isocyanato-1-methyl-3-isocyanato-methylcyclohexan, 1-Isocyanato-1-methyl-4-isocyanato-methylcyclohexan, Bis-(isocyanatomethyl)-norbornan verwendet werden.

Beispiele für aromatische Isocyanate der Komponente A1) sind 1,5-Naphthalendiisocyanat, 1,3-und 1,4-Bis-(2-isocyanato-prop-2-yl)-benzol (TMXDI), 2,4- und 2,6-Diisocyanatotoluol (TDI) insbesondere das 2,4 und das 2,6-Isomere und technische Gemische der beiden Isomeren, 2,4'-und 4,4'-Diisocyanatodiphenylmethan (MDI), 1,5-Diisocyanatonaphthalin, 1,3-Bis(isocyanatomethyl)benzol (XDI) eingesetzt werden.

Besonders bevorzugt werden in Komponente A1) Polyisocyanate oder Polyisocyanatgemische der genannten Art mit ausschließlich aliphatisch und/oder cycloaliphatisch gebundenen Isocyanatgruppen eingesetzt, insbesondere auf Basis von Hexamethylendiisocyanat (HDI), Isophorondiisocyanat (IPDI) und/oder 4,4'-Diisocyanatodicyclohexylmethan.

Als Komponente A2) können alle Verbindungen einzeln oder in beliebigen Mischungen verwendet werden, die mindestens eine gegenüber Isocyanaten reaktive Gruppe und mindestens eine ungesättigte Funktion aufweisen, die unter Einwirkung aktinischer Strahlung mit ethylenisch ungesättigten Verbindungen unter Polymerisation reagiert.

Bevorzugt werden als Verbindungen der Komponente A2 α,β-ungesättigte Carbonsäurederivate wie Acrylate, Methacrylate, Maleinate, Fumarate, Maleimide, Acrylamide, sowie Vinylether, Propenylether, Allylether und Dicyclopentadienyl-Einheiten enthaltende Verbindungen, die mindestens eine gegenüber Isocyanaten reaktive Gruppe aufweisen, eingesetzt; besonders bevorzugt sind dies Acrylate und Methacrylate mit mindestens einer isocyanatreaktiven Gruppe.

Beispiele für Verbindungen der Komponente A2) sind 3-Isocyanatopropylmethacrylat, Teilumsetzungsprodukte von Polyisocyanaten mit hydroxyfunktionellen Acrylaten oder Methacrylaten zu Verbindungen mit Urethan und/oder Allophanatstruktureinheiten wie sie beispielsweise in DE-OS 29 09 715 (insbesondere Beispiele Addukte P, Q, R und S), EP-A 126 359 (insbesondere Beispiele 1 bis 3), US-A 6 465 539 (Seite 2, Zeile 20 bis Seite 4, Zeile 55, sowie insbesondere die Beispielverbindungen F und G) und DE-A-198 60 041 (insbesondere Beispiele 1 bis 10, 12 sowie V1 bis V4) beschrieben werden.

Als hydroxyfunktionelle Acrylate oder Methacrylate kommen beispielsweise in Betracht Verbindungen wie 2-Hydroxyethyl(meth)acrylat, Polyethylenoxid-mono(meth)acrylate, Polypropylenoxidmono(meth)acrylate, Polyalkylenoxidmono(meth)acrylate, Poly(ε-caprolacton)mono(meth)-acrylate, wie z.B. Tone^{®} M100 (Union Carbide, USA), 2-Hydroxypropyl(meth)acrylat, 4-Hydroxybutyl(meth)acrylat, 3-Hydroxy-2,2-dimethylpropyl(meth)acrylat, die hydroxyfunktionellen Mono-, Di- oder Tetraacrylate mehrwertiger Alkohole wie Trimethylolpropan, Glycerin, Pentaerythrit, Dipentaerythrit, ethoxyliertes, propoxyliertes oder alkoxyliertes Trimethylolpropan, Glycerin, Pentaerythrit, Dipentaerythrit oder deren technische Gemische. Geeignet sind auch Alkohole, die sich aus der Umsetzung von doppelbindungshaltigen Säuren mit gegebenenfalls doppelbindungshaltigen, monomeren Epoxidverbindungen erhalten lassen, so zum z.B. die Umsetzungsprodukte von (Meth)acrylsäure mit Glycidyl(meth)acrylat oder dem Glycidylester der Versaticsäure (Cardura^{®} E10, Resolution Nederland BV, Shell BV, NL).

Als Komponente A3) können beispielsweise hydrophilierend wirkende Verbindungen mit mindestens einer isocyanatreaktiven Gruppe einzeln oder als Mischung eingesetzt werden. Hydrophilierend wirkende Verbindungen werden insbesondere dann eingesetzt, wenn das erfindungsgemäße Polyisocyanat in Wasser oder wasserhaltigen Mischungen gelöst oder dispergiert werden soll.

Unter hydrophilierend wirkenden Verbindungen werden alle ionisch, potentiell ionisch und nicht ionisch hydrophilierenden Verbindungen mit mindestens einer gegenüber Isocyanaten reaktiven Gruppe verstanden. Diese Verbindungen weisen als isocyanatreaktive Gruppen bevorzugt Hydroxy- und/oder Aminofunktionen auf.

Als ionisch oder potentiell ionisch hydrophilierende Verbindungen der Komponente A3) werden bevorzugt Verbindungen eingesetzt, die mindestens eine isocyanatreaktive Gruppe sowie mindestens eine Funktionalität, wie z.B. -COOY, -SO₃Y, -PO(OY)₂ (Y = H, NH₄⁺, Metallkation), -NR₂, - NR₃⁺, -PR₃⁺ (R = H, Alkyl, Aryl), aufweisen. Unter potentiell ionisch hydrophilierend werden solche Verbindungen verstanden, die bei Wechselwirkung mit wässrigen Medien ein ggf. pH-Wert-abhängiges Dissoziationsgleichgewicht eingehen und auf diese Weise negativ, positiv oder neutral geladen sind.

Geeignete ionisch oder potentiell ionisch hydrophilierende Verbindungen sind z.B. Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Hydroxypivalinsäure, N-(2-Aminoethyl)-β-alanin, 2-(2-Amino-ethylamino)-ethansulfonsäure, Ethylendiamin-propyl- oder butylsulfonsäure, 1,2- oder 1,3-Propylendiamin-β-ethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in der DE-A 2 446 440 (Seite 5-9, Formel I-III) sowie in kationische Gruppen überführbare Bausteine wie N-Methyl-diethanolamin als hydrophile Aufbaukomponenten. Bevorzugte ionisch oder potentielle ionisch hydrophilierende Verbindungen sind solche, die über Carboxy- oder Carboxylat- und/oder Sulfonatgruppen und/oder Ammoniumgruppen verfügen. Besonders bevorzugte ionische Verbindungen sind solche, die Carboxyl- und/oder Sulfonatgruppen als ionische oder potentiell ionische Gruppen enthalten, wie die Salze von N-(2-Aminoethyl)-β-alanin, der 2-(2-Amino-ethylamino-)ethansulfonsäure oder des Additionsproduktes von IPDI und Acrylsäure (EP-A 0 916 647, Beispiel 1) sowie der Dimethylolpropionsäure.

Als hydrophile nichtionische Verbindungen können Verbindungen mit Polyetherstruktur, bevorzugt Alkylenoxid-basierende Polyether eingesetzt, die mindestens eine Hydroxy- oder Aminogruppe als isocyanatreaktive Gruppe enthalten.

Diese Verbindungen mit Polyetherstruktur können beispielsweise einwertige, im statistischen Mittel 5 bis 70, bevorzugt 7 bis 55 Ethylenoxideinheiten pro Molekül aufweisende Polyalkylenoxidpolyetheralkohole mit mindestens 30 mol-% Ethylenoxid sein, wie sie in an sich bekannter Weise durch Alkoxylierung geeigneter Startermoleküle zugänglich sind (z.B. in Ullmanns Encyclopädie der technischen Chemie, 4.Auflage, Band 19, Verlag Chemie, Weinheim S. 31-38).

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge getrennt voneinander oder im Gemisch bei der Alkoxylierungsreaktion eingesetzt werden können, so dass Block- oder Mischpolyether erhalten werden.

Bevorzugt handelt es sich bei den Verbindungen mit Polyetherstruktur um reine Polyethylenoxidpolyether oder gemischte Polyalkylenoxidpolyether, deren Alkylenoxideinheiten zu mindestens 30 mol-%, bevorzugt zu mindestens 40 mol-% aus Ethylenoxideinheiten bestehen.

Ganz besonders bevorzugt sind monofunktionelle gemischte Polyalkylenoxidpolyether, die mindestens 40 mol-% Ethylenoxid- und maximäl 60 mol-% Propylenoxideinheiten aufweisen.

Desweiteren können als Verbindungen der Komponente A3) niedermolekulare Mono-, Di- oder Polyole wie kurzkettige, d.h. 2 bis 20 Kohlenstoffatome enthaltende, aliphatische, araliphatische oder cycloaliphatische Monoalkohole, Diole oder Triole eingesetzt werden. Beispiele für Monoalkohole sind Methanol, Ethanol, die isomeren Propanole, Butanole, Pentanole, weiterhin Diacetonalkohol, Fettalkohole oder fluorierte Alkohole wie sie z.B. unter dem Namen Zonyl^{®} von der Firma DuPont erhältlich sind. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropylester). Beispiele geeigneter Triole sind Trimethylolethan, Trimethylolpropan oder Glycerin. Bevorzugt sind die Alkohole 1,4-Butandiol, 1,4-Cyclohexandimethanol, 1,6-Hexandiol und Trimethylolpropan.

Wenn überhaupt werden genannte Mono-, Di- oder Triole bevorzugt nur in Mengen < 0,3 insbesondere < 0,1 Equivalente pro Equivalent Isocyanat verwendet. Besonders bevorzugt wir auf die Verwendung dieser Mono-, Di- oder Triole verzichtet.

Als Blockierungsmittel in Komponente A4) werden CH-azide cyclische Ketone der allgemeinen Formel (2) eingesetzt, 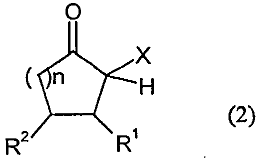 in welcher
- X: eine elektronenziehende Gruppe ist,
- R¹, R²: unabhängig voneinander ein Wasserstoffatom, ein gesättigter oder ungesättigter aliphatischer oder cycloaliphatischer, ein gegebenenfalls substituierter aromatischer oder araliphatischer Rest sind und je bis zu 12 Kohlenstoffatome und gegebenenfalls bis zu 3 Heteroatome der Elemente Sauerstoff, Schwefel, Stickstoff enthalten und gegebenenfalls durch Halogenatome substituiert sind und
- n: eine ganze Zahl von 0 bis 5 ist.

Bei der elektronenziehenden Gruppe X kann es sich um alle Substituenten handeln, die durch z.B. mesomere und/oder induktive Effekte zu einer CH-Azidität des -ständigen Wasserstoffes führen. Dies können beispielsweise Estergruppen, Sulfoxidgruppen, Sulfongruppen, Nitrogruppen, Phosphonatgruppen, Nitrilgruppen, Isonitrilgruppen oder Carbonylgruppen sein. Bevorzugt sind Nitril-und Estergruppen, besonders bevorzugt der Carbonsäuremethylester- und Carbonsäureethylestergruppen.

Bevorzugt weist das aktivierte cyclische System der Formel (2) eine Ringgröße von 5 (n = 1) und 6 (n = 2) auf.

Bevorzugte Verbindungen der allgemeinen Formel (2) sind Cyclopentanon-2-carboxymethylester und -carboxyethylester, Cyclopentanon-2-carbonsäurenitril, Cyclohexanon-2-carboxymethylester und -carboxyethylester oder Cyclopentanon-2-carbonylmethan. Besonders bevorzugt sind Cyclopentanon-2-carboxymethylester und -carboxyethylester sowie Cyclohexanon-2-carboxymethylester und -carboxyethyl-ester.

Selbstverständlich können in Komponente A4) die genannten CH-aziden cyclischen Ketone sowohl in Mischungen untereinander als auch in beliebigen Mischungen mit anderen Blockierungsmitteln eingesetzt werden. Geeignete weitere Blockierungsmittel sind beispielsweise Alkohole, Lactame, Oxime, Malonester, Alkylacetoacetate, Triazole, Phenole, Imidazole, Pyrazole sowie Amine, wie z.B. Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, ε-Caprolactam, N-Methyl-, N-Ethyl-, N-(Iso)propyl-, N-n-Butyl-, N-iso-Butyl-, N-tert.-Butyl-benzylamin oder 1,1-Dimethylbenzylamin, N-Alkyl-N-1,1-Dimethylmethylphenylamin, Addukte von Benzylamin an Verbindungen mit aktivierten Doppelbindungen wie Malonsäureestern, N,N-Dimethylaminopropylbenzylamin und andere tertiäre Aminogruppen enthaltende gegebenenfalls substituierte Benzylamine und/oder Dibenzylamin oder beliebige Gemische dieser Blockierungsmittel. Falls überhaupt mitverwendet beträgt der Anteil dieser weiteren von CH-aziden cyclischen Ketonen verschiedenen Blockierungsmittel der Komponente A4) bis zu 80 Gew.-%, bevorzugt bis zu 60 Gew.-%, ganz besonders bevorzugt bis zu 20 Gew.-% der gesamten Komponente A4).

Ganz besonders bevorzugt wird ausschließlich Cyclopentanon-2-carboxyethylester als Komponente A4) eingesetzt.

Das Verhältnis von zu blockierenden Isocyanatgruppen zu Blockierungsmittel A4) beträgt 0,8 bis 1,2 mol, bevorzugt 1:1.

Der Gehalt freier NCO-Gruppen in den erfindungsgemäßen Polyisocyanaten ist < 5 Gew.-%, bevorzugt < 0,5 Gew.-%, insbesondere < 0,1 Gew.-%.

Als Verbindungen der Komponente A5) können alle dem Fachmann für die Katalyse der NCO-Blockierung bekannte Verbindungen einzeln oder in beliebigen Mischungen verwendet werden. Bevorzugt sind Alkali- und Erdalkalimetallbasen, wie z.B. gepulvertes Natriumcarbonat (Soda) oder Trinatriumphosphat, die Metallsalze der zweiten Nebengruppe, insbesondere des Zinks, sowie tertiäre Amine wie DABCO (1,4-Diazabicyclo[2.2.2]octan).

Bevorzugt werden in Komponente A5) Natriumcarbonat, Kaliumcarbonat oder Zinksalze insbesondere Zink-2-ethylhexanoat verwendet.

Die Komponente A5) wird in einer Menge von 0,05 bis 10 Gew.-%, bevorzugt 0,1 bis 3 Gew.-% , insbesondere 0,2 bis 1 Gew.-% bezogen auf den nichtflüchtigen Anteil des erfindungsgemäßen Polyisocyanats im erfindungsgemäßen Verfahren verwendet.

Als gegebenenfalls zu verwendende Komponente A6) können alle dem Fachmann aus der Polyurethanchemie und der Chemie ethylenisch ungesättigter Beschichtungsstoffe bekannten Hilfs- und Zusatzstoffe oder deren Gemische enthalten sein. Bevorzugt ist die Verwendung von Stabilisatoren zur Vermeidung vorzeitiger Polymerisation in einer Menge von 0,01 - 1 Gew.-%, bevorzugt 0,1 - 0,5 Gew. -% bezogen auf die Menge der ungesättigten Gruppen. Solche Inhibitoren sind beispielsweise in Houben-Weyl, Methoden der organischen Chemie, 4. Auflage, Band XIV/1, Georg Thieme Verlag, Stuttgart 1961, Seite 433 ff. beschrieben. Als Beispiele seien genannt: Natriumdithionit, Natriumhydrogensulfid, Schwefel, Hydrazin, Phenylhydrazin, Hydrazobenzol, N-Phenyl-β-naphthylamin, N-Phenyl-ethanoldiamin, Dinitrobenzol, Picrinsäure, p-Nitroso-dimethylanilin, Diphenylnitrosamin, Phenole, wie para-Methoxyphenol, 2,5-Di-tert.-Butylhydrochinon, 2,6-Di-tert.-butyl-4-methylphenol, p-tert-Butyl-brenzcatechin oder 2,5-Di-tert.-amylhydrochinon, Tetramethyl-thiuramdisulfid, 2-Mercaptobenzthiazol, Dimethyl-dithiocarbaminsäure-natriumsalz, Phenothiazin, N-Oxyl-Verbindungen wie z.B. 2,2,6,6-Tetramethylpiperidin-N-Oxid (TEMPO) oder eines seiner Derivate. Ebenso können die Stabilisatoren auch chemisch eingebaut werden, dabei eignen sich Verbindungen der oben genannten Klassen insbesondere, wenn sie noch weitere freie aliphatische Alkoholgruppen oder primäre oder sekundäre Amingruppen tragen und damit dann über Urethan- oder Harnstoff-Gruppen chemisch gebunden Stabilisatoren darstellen. Hierfür besonders geeignet sind 2,2,6,6-Tetramethyl-4-hydroxy-piperidin-N-oxid. Weiterhin wird in einer bevorzugten Variante ein sauerstoffhaltiges Gas, vorzugsweise Luft, während der Herstellung der erfindungsgemäßen Polyisocyanate eingeleitet.

Die Herstellung der erfindungsgemäßen Polyisocyanate kann in Substanz oder aber in Gegenwart geeigneter Lösungsmittel oder Reaktivverdünner erfolgen. Geeignete Lösungsmittel sind die üblichen Lacklösungsmittel, wie z.B. Butylacetat, Methoxyproylacetat oder Solventnaphtha der Fa. Exxon-Chemie als aromatenhaltiges Lösungsmittel sowie Gemische der genannten Lösungsmittel. Bevorzugt wird die Blockierung in den genannten Lösungsmitteln vorgenommen, wobei der einzustellende Festkörpergehalt zwischen 10 und 90 % beträgt.

Geeignete Reaktiwerdünner sind beispielsweise die in der Technologie der Strahlenhärtung bekannten Verbindungen(vgl. Römpp Lexikon Chemie, S.491, 10. Aufl. 1998, Georg-Thieme-Verlag, Stuttgart), insbesondere solche mit geringen Hydroxylgehalten unter 30, bevorzugt unter 10 mg KOH/g. Beispielhaft seien die Ester der Acrylsäure oder Methacrylsäure erwähnt, bevorzugt der Acrylsäure, der folgenden Alkohole: isomere Butanole, Pentanole, Hexanole, Heptanole, Octanole, Nonanole und Decanole, weiterhin cycloaliphatische Alkohole wie Isobornol, Cyclohexanol und alkylierte Cyclohexanole, Dicyclopentanol, arylaliphatische Alkohole wie Phenoxyethanol und Nonylphenylethanol, sowie Tetrahydrofurfurylalkohole. Weiterhin können alkoxylierte Derivate dieser Alkohole verwendet werden. Zweiwertige Alkohole sind beispielsweise Alkohole wie Ethylenglykol, Propandiol-1,2, Propandiol-1,3, Diethylenglykol, Dipropylenglykol, die isomeren Butandiole, Neopentylglykol, Hexandiol-1,6, 2-Ethylhexandiol und Tripropylenglykol oder auch alkoxylierte Derivate dieser Alkohole. Bevorzugte zweiwertige Alkohole sind Hexandiol-1,6, Dipropylenglykol und Tripropylenglykol. Höherwertige Alkohole sind Glycerin, Trimethylolpropan, Ditrimethylolpropan, Pentaerythrit oder Dipentaerythrit oder deren alkoxylierte Derivate.

Die Herstellung der erfindungsgemäßen Polyisocyanate wird bevorzugt in einem Temperaturbereich von 25 bis 180°C, besonders bevorzugt von 30 bis 90°C durchgeführt.

In einer bevorzugten Ausführungsform der Erfindung wird so vorgegangen, dass Komponente A1) vorgelegt wird und bei Temperaturen von 30 bis 150°C mit A2), ggf. A3) und ggf. A4) umgesetzt wird, bis der NCO-Gehalt auf den gewünschten Wert gefallen ist. Die Komponenten A2) bis A4) können dabei einzeln in beliebiger Reihenfolge oder als Mischung zugegeben werden. Bevorzugt ist die Zugabe als Mischung. Bevorzugt wird während der Umsetzung der genannten Komponenten ein sauerstoffhaltiges Gas, bevorzugt Luft, durch das Reaktionsmedium geleitet.

Möglich ist auch A2), A3) und A4) vorzulegen und A1) zuzudosieren. Auch erst A2), A3), A4) oder eine Mischung von zwei dieser Koponenten vorzulegen, dann A1) zuzudosieren und schließlich die noch fehlenden Bestandteile A2), A3) und/oder A4) zuzugeben, ist möglich.

Der Bestandteil A5) kann zu Beginn, während oder nach der Zugabe von A2), A3) oder A4) zugegeben werden. Bevorzugt wird A5) unmittelbar nach A4) zugegeben werden. Falls vorhanden, wird A6), insbesondere wenn Stabilisatoren enthalten sind, zumindest teilweise vor Zugabe von A2) zugegeben. Lösemittel A7) werden bevorzugt vor oder nach Ende der Umsetzung zugegeben. Insbesondere wenn das Lösungsmittel mit Isocyanaten reagiert, ist es zweckmäßig, das Lösungsmittel erst zuzugeben, wenn die Reaktion beendet oder der NCO-Gehalt unter 1 Gew.% gefallen ist.

Bevorzugt werden pro Equivalent NCO in A1) 0,2 bis 0,8 Equivalente A4), insbesondere 0,3 bis 0,7 Equivalente A4), eingesetzt. Bevorzugt werden pro Equivalent NCO in A1) 0,2 bis 0,8 Equivalente A2), insbesondere 0,3 bis 0,7 Equivalente A4), eingesetzt.

Sollen die erfindungsgemäßen Polyisocyanate Bestandteil eines bei Applikation festen Beschichtungsmittels, z.B. eines Pulverlacks, sein, so sollten die erfindungsgemäßen Polyisocyanate entweder amorph mit einer Glasübergangstemperatur von 20 bis 90°C, insbesondere 30 bis 65°C, oder kristallin mit einem Schmelzpunkt von 30 bis 130°C, insbesondere von 60 bis 120°C bevorzugt sein. Derartige Polyisocyanate werden z.B. durch den Einsatz von Verbindungen mit cycloaliphatischen Struktureinheiten bei der Herstellung der erfindungsmäßen Polyisocyanate erhalten. Bevorzugt werden hierfür cycloaliphatische Diisocyante in Komponente A1) eingesetzt.

Ein weiterer Gegenstand der Erfindung sind Beschichtungsmittel enthaltend
B1) ein oder mehrere erfindungsgemäße Polyisocyanate und
B2) ein oder mehrere organische Polyisocyanate, die Struktureinheiten der Formel (1) 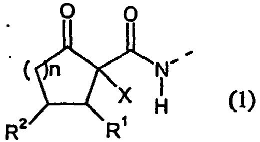 aufweisen, in welcher
   - X: eine elektronenziehende Gruppe ist,
   - R¹, R²: unabhängig voneinander ein Wasserstoffatom, ein gesättigter oder ungesättigter aliphatischer oder cycloaliphatischer, ein gegebenenfalls substituierter aromatischer oder araliphatischer Rest sind und je bis zu 12 Kohlenstoffatome und gegebenenfalls bis zu 3 Heteroatome der Elemente Sauerstoff, Schwefel, Stickstoff enthalten und gegebenenfalls durch Halogenatome substituiert sind und

   - n: eine ganze Zahl von 0 bis 5 ist
B3) ein oder mehrere Verbindungen, die mindestens eine isocyanatreaktive Gruppe aufweisen und ggf. eine oder mehrere funktionelle Gruppen enthalten, die unter Einwirkung aktinischer Strahlung mit ethylenisch ungesättigten Verbindungen unter Polymerisation reagieren,
B4) ggf. Verbindungen, die funktionelle Gruppen tragen, die durch Einwirkung aktinischer Strahlung mit ethylenisch ungesättigten Verbindungen unter Polymerisation reagieren und die weder NCO-Gruppen noch NCO-reaktive Gruppen aufweisen,
B5) ggf. Katalysatoren und
B6) ggf. Hilfs- und Zusatzstoffe
B7) ggf. Produkte aus Reaktionen der Komponenten B 1) bis B6) untereinander,
Polyisocyanate im Sinne von B2) basieren auf den bereits vorstehend bei Komponente A1) genannten Isocyanaten, insbesondere den dort als bevorzugt genannten.

Die Polyisocyanate der Komponente B2) können neben den Strukturen der allgemeinen Formel (1) auch blockierte NCO-Gruppen aufweisen, die mit weiteren, unter A4) genannten von cyclischen Ketonen verschiedenen Blockierungsmitteln blockiert sind. Die Herstellung der unter B2) eingesetzten blockierten Polyisocyanate ist dem Fachmann bekannt und verläuft analog der Blockierung der erfindungsgemäßen Polyisocyanate ggf. unter Verwendung genannter Katalysatoren.

Die Verbindungen der Komponente B3) können monomer, oligomer oder polymer sein und enthalten mindestens eine, bevorzugt zwei oder mehr mit Isocyanaten reaktive Gruppen.

Geeignete Verbindungen der Komponente B3) sind niedermolekulare kurzkettige, d.h. 2 bis 20 Kohlenstoffatome enthaltende aliphatische, araliphatische oder cycloaliphatische Diole oder Triole. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropylester). Beispiele geeigneter Triole sind Trimethylolethan, Trimethylolpropan oder Glycerin. Geeignete höherfunktionelle Alkohole sind Ditrimethylolpropan, Pentaerythrit, Dipentaerythrit oder Sorbit

Geeignet sind auch höhermolekulare Polyole wie Polyesterpolyole, Polyetherpolyole, hydroxyfunktionelle Acrylharze, hydroxyfunküonelle Polyurethane oder entsprechende Hybride (vgl. Römpp Lexikon Chemie, S.465-466, 10. Aufl. 1998, Georg-Thieme-Verlag, Stuttgart).

Zu den Verbindungen der Komponente B3) gehören auch alle bereits unter A2) zusammengefassten Verbindungen und darüberhinaus isocyanat-reaktive oligomere oder polymere ungesättigte Acrylat- und/oder Methacrylatgruppen enthaltende Verbindungen alleine oder in Kombination mit den vorgenannten monomeren Verbindungen. Bevorzugt werden dabei hydroxylgruppenhaltige Polyesteracrylate mit einem OH-Gehalt von 30 bis 300 mg KOH/g, bevorzugt 60 bis 200, besonders bevorzugt 70 bis 120 eingesetzt.

Die Herstellung von Polyesteracrylaten wird in DE-A 4 040 290 (S.3, Z. 25 - S.6, Z. 24), DE-A-3 316 592 (S. 5, Z. 14 - S. 11, Z. 30) und P. K. T. Oldring (Ed.), Chemistry & Technology of UV & EB Formulations For Coatings, Inks & Paints, Vol. 2, 1991, SITA Technology, London, S. 123 -135 beschrieben.

Ebenfalls in B3) verwendet werden können die an sich bekannten hydroxylgruppenhaltigen Epoxy(meth)acrylate mit OH-Gehalten von 20 bis 300 mg KOH/g, bevorzugt von 100 bis 280 mg KOH/g, besonders bevorzugt von 150 bis 250 mg KOH/g oder hydroxylgruppenhaltige Polyurethan(meth)acrylate mit OH-Gehalten von 20 bis 300 mg KOH/g, bevorzugt von 40 bis 150 mg KOH/g, besonders bevorzugt von 50 bis 100 mg KOH/g sowie deren Mischungen untereinander und Mischungen mit hydroxylgruppenhaltigen ungesättigten Polyestern sowie Mischungen mit Polyester(meth)acrylaten oder Mischungen hydroxylgruppenhaltiger ungesättigter Polyester mit Polyester(meth)acrylaten. Solche Verbindungen werden ebenfalls in P. K. T. Oldring (Ed.), Chemistry & Technology of UV & EB Formulations For Coatings, Inks & Paints, Vol. 2, 1991, SITA Technology, London S 37 - 56 beschrieben. Hydroxylguppenhaltige Epoxy(meth)acrylate basieren insbesondere auf Umsetzungsprodukten von Acrylsäure und/oder Methacrylsäure mit Epoxiden (Glycidylverbindungen) von monomeren, oligomeren oder polymeren Bisphenol-A, Bisphenol-F, Hexandiol und/oder Butandiol oder deren ethoxilierten und/oder propoxilierten Derivaten.

Als Verbindungen der Komponente B4) können Polymere wie Polyacrylate, Polyurethane, Polysiloxane, sowie Verbindungen, die durch Einwirkung aktinischer Strahlung mit ethylenisch ungesättigten Verbindungen unter Polymerisation reagieren, eingesetzt werden. Solche Gruppen sind α,β-ungesättigte Carbonsäurederivate wie Acrylate, Methacrylate, Maleinate, Fumarate, Maleimide, Acrylamide, weiterhin Vinylether, Propenylether, Allylether und Dicyclopentadienyl-Einheiten enthaltende Verbindungen. Bevorzugt sind Acrylate und Metacrylate. Beispiele beinhalten die in der Technologie der Strahlenhärtung bekannten Reaktivverdünner (vgl. Römpp Lexikon Chemie, S.491, 10. Aufl. 1998, Georg-Thieme-Verlag, Stuttgart) oder die in der Technologie der Strahlenhärtung bekannten Bindemittel wie Polyetheracrylate, Polyesteracrylate, Urethanacrylate, Epoxyacrylate, soweit diese einen Gehalt von Hydroxylgruppen unter 30, bevorzugt unter 20, besonders bevorzugt unter 10 mg KOH/g aufweisen.

Beispielhaft seien die Ester der Acrylsäure oder Methacrylsäure als Bestandteil von B4) genannt, bevorzugt der Acrylsäure, der folgenden Alkohole. Einwertige Alkohole sind die isomeren Butanole, Pentanole, Hexanole, Heptanole, Octanole, Nonanole und Decanole, weiterhin cycloaliphatische Alkohole wie Isobornol, Cyclohexanol und alkylierte Cyclohexanole, Dicyclopentanol, arylaliphatische Alkohole wie Phenoxyethanol und Nonylphenylethanol, sowie Tetrahydrofurfurylalkohole. Weiterhin können alkoxylierte Derivate dieser Alkohole verwendet werden. Zweiwertige Alkohole sind beispielsweise Alkohole wie Ethylenglykol, Propandiol-1,2, Propandiol-1,3, Diethylenglykol, Dipropylenglykol, die isomeren Butandiole, Neopentylglykol, Hexandiol-1,6, 2-Ethylhexandiol und Tripropylenglykol oder auch alkoxylierte Derivate dieser Alkohole. Bevorzugte zweiwertige Alkohole sind Hexandiol-1,6, Dipropylenglykol und Tripropylenglykol. Höherwertige Alkohole sind Glycerin, Trimethylolpropan, Ditrimethylolpropan, Pentaerythrit oder Dipentaerythrit oder deren alkoxylierte Derivate.

Als Bestandteil von B5) können zur Beschleunigung der Aushärtung der blockierten Isocyanate mit den jeweiligen Wasserstoff-enthaltenden Reaktionspartnern wie Alkoholen, Aminen und den gemischt Alkohol- und Amin-haltigen Reaktionspartnern prinzipiell Lewis Säuren mitverwendet werden. Geeignet sind hierbei mindestens zweiwertige Ionen von Lewis-Säuren. Geeignet sind z.B. Salze des Zinks, des Titans, des Zirkons und des Wismuts. Bevorzugt sind Verbindungen des Zinks- und des Zirkons, wobei Zink-2-ethylhexanoat besonders bevorzugt ist.

Die Menge des Katalysators B5) kann durch den Fachmann den Erfordernissen der Aushärtung angepasst werden, wobei Aushärtetemperatur zu berücksichtigen sind. Geeignete Mengen sind z.B. 0,01 bis 2 Gew.%, bevorzugt ist die Verwendung von 0,05 bis 1 Gew.%, besonders bevorzugt ist 0,07 bis 0,6 Gew.% Katalysator auf gesamt Festkörpergehalt. Sollte bei höheren Einbrenntemperaturen, d.h. ab ca. 160°C gearbeitet werden, kann auf den Katalysator gegebenenfalls auch verzichtet werden.

Als Komponente B6) können in der Technologie der Lacke, Farben, Druckfarben, Dichtstoffe und Klebstoffe übliche Zusätze oder Hilfsmittel enthalten sein. Dazu gehören auch durch aktinische Strahlung aktivierbare Initiatoren, die eine radikalische Polymerisation der entsprechenden polymerisierbaren Gruppen auslösen. Fotoinitiatoren, die durch UV- oder sichtbares Licht aktiviert werden, sind hierbei bevorzugt. Fotoinitiatoren sind an sich bekannte, kommerziell vertriebene Verbindungen, wobei zwischen unimolekularen (Typ I) und bimolekularen (Typ II) Initiatoren unterschieden wird. Geeignete (Typ I)-Systeme sind wie aromatische Ketonverbindungen, z.B. Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketale, Acylphosphinoxide z.B. 2,4,6-Trimethyl-benzoyl-diphenylphosphinoxid, Bisacylphosphinoxide, Phenylglyoxylsäureester, Campherchinon, α-Aminoalkylphenone, α,α-Dialkoxyacetophenone und α-Hydroxyalkylphenone. Soll das erfindungsgemäße Beschichtungsmittel wässrig verarbeitet werden, so finden bevorzugt Fotoinitiatoren Verwendung, die leicht in wässrige Beschichtungsmittel einarbeitbar sind. Solche Produkte sind beispielsweise Irgacure^{®} 500, Irgacure^{®} 819 DW (Fa. Ciba, Lampertheim, DE), Esacure^{®} KIP (Fa. Lamberti, Aldizzate, Italien). Es können auch Gemische dieser Verbindungen eingesetzt werden.

Soll die Härtung der polymerisierbaren Bestandteile zusätzlich thermisch initiiert werden, eignen sich als Verbindungen der Komponente B6) Peroxyverbindungen wie Diacylperoxide z.B. Benzoylperoxid, Alkylhydroperoxid wie Diisopropylbenzolmonohydroperoxid, Alkylperester wie tert.-Butylperbenzoat, Dialkylperoxide wie Di.-tertbutylperoxid, Peroxidicarbonate wie Dicetylperoxiddicarbonat, anorganische Peroxide wie Ammoniumperoxodisulfat, Kaliumperoxodisulfat oder auch Azoverbindungen wie 2,2'-Azobis[N-(2-propenyl)-2-methylpropionamide], 1-[(cyano-1-methylethyl)azo]formamide, 2,2'-Azobis(N-butyl-2-methylpropionamide), 2,2'-Azobis(N-cyclohexyl-2-methylpropionamide), 2,2'-Azobis{2-methyl-N-[2-(1-hydroxybutyl)]propionamide}, 2,2'-Azobis{2-methyl-N-[2-(1-hydroxybutyl)]propionamide}, 2,2'-Azobis{2-methyl-N-[1,1-bis-(hydroxymethyl)-2-hydroxyethyl]-propionamide}, weiterhin auch Benzpinakol. Für wässrige Beschichtungssysteme bevorzugt werden Verbindungen, die wasserlöslich sind oder als wässrige Emulsionen vorliegen. Diese Radikalbildner können in bekannter Weise mit Beschleunigern kombiniert werden.

Weiterhin verwendbare Zusätze sind bereits unter A6) beschriebene Stabilisatoren, Lichtschutzmittel wie UV-Absorber und sterisch gehinderte Amine (HALS), weiterhin Antioxidantien, Füllstoffe sowie Lackhilfsmittel, z.B. Antiabsetzmittel, Entschäumungs- und/oder Netzmittel, Verlaufmittel, Reaktivverdünner, Weichmacher, Katalysatoren, Hilfslösemittel und/oder Verdicker sowie Pigmente, Farbstoffe und/oder Mattierungsmittel. Der Einsatz von Lichtschutzmitteln und die verschiedenen Typen sind beispielhaft beschrieben in A. Valet, Lichtschutzmittel für Lacke, Vincentz Verlag, Hannover, 1996.

Die erfindungsgemäßen Polyisocyanate können zur Herstellung von Lacken, Beschichtungen, Schlichten, Klebstoffen und Formkörpern verwendet werden.

Ein weiterer Gegenstand der Erfindung ist ein Verfahren zur Herstellung der erfindungsgemäßen Beschichtungsmittel, bei dem die Bestandteile des Beschichtungsmittels in beliebiger Reihenfolge bei Temperaturen von -20 bis 120°C, bevorzugt 10 bis 90°C, insbesondere 20 bis 60°C miteinander vermischt werden. Dabei kann das Beschichtungsmittel bei Raumtemperatur fest, flüssig, gelöst oder dispergiert vorliegen. Feste Beschichtungsmittel werden mit den in der Pulverlacktechnik üblichen Geräten, insbesondere mit Extrudern, Mühlen und Sichtern hergestellt. Für flüssige, gelöste oder dispergierte Beschichtungsmittel eignen sich die dem Fachmann aus der Beschichtungstechnologie flüssiger Systeme bekannten Rührwerke und Dispergiereinrichtungen.

Bevorzugt beträgt das Verhältnis von blockierten Isocyanatgruppen in B1) und B2) zu isocyanat-reaktiven Gruppen in B3) 0,5 bis 2, bevorzugt 0,8 bis 1,5, besonders bevorzugt 1 zu 1.

Die Verbindungen B4) werden ggf. in Mengen bis zu 75 Gew.%, bevorzugt unter 50 Gew.% bezogen auf das Beschichtungsmittel und besonders bevorzugt gar nicht eingesetzt.

Die erfindungsgemäßen Beschichtungsmittel lassen sich durch die üblichen Techniken auf unterschiedlichste Substrate applizieren, wie beispielsweise durch Spritzen, Walzen, Rakeln, Gießen, Sprühen, Streichen, Tränken oder Tauchen. Geeignete Substrate sind beispielsweise Holz, Metall, insbesondere auch Metall wie es in den Anwendungen der sogenannten Draht-, Coil-, Can- oder Container-Lackierung verwendet wird, weiterhin Kunststoff, insbesondere ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1), Papier, Leder, Textilien, Filz, Glas, elektronische Baugruppen oder mineralische Untergründe. Es können auch Substrate, die aus verschiedenen der vorgenannten Materialien bestehen, oder bereits beschichtete Substrate lackiert werden. Es ist auch möglich die Beschichtungsmittel nur temporär auf ein Substrat aufzubringen, dann teilweise oder vollständig zu härten und wieder abzulösen, um z.B. Folien herzustellen.

Die applizierten Schichtdicken (vor der Härtung) liegen typischerweise zwischen 0,5 und 5000 µm, bevorzugt zwischen 5 und 1500 µm, besonders bevorzugt zwischen 15 und 1000 µm.

Die Strahlungshärtung erfolgt bevorzugt durch Einwirkung energiereicher Strahlung, also UV-Strahlung oder Tageslicht, z.B. Licht der Wellenlänge 200 bis 750 nm, oder durch Bestrahlen mit energiereichen Elektronen (Elektronenstrahlung, 150 bis 300 keV). Als Strahlungsquellen für Licht oder UV-Licht dienen beispielsweise Hochdruckquecksilberdampflampen, wobei der Quecksilberdampf durch Dotierung mit anderen Elementen wie Gallium oder Eisen modifiziert sein kann. Laser, gepulste Lampen (unter der Bezeichnung UV-Blitzlichtstrahler bekannt), Halogenlampen oder Eximerstrahler sind ebenfalls möglich. Die Strahler können ortsunbeweglich installiert sein, so dass das zu bestrahlende Gut mittels einer mechanischen Vorrichtung an der Strahlungsquelle vorbeibewegt wird oder die Strahler können beweglich sein und das zu bestrahlende Gut verändert bei der Härtung seinen Ort nicht. Die üblicherweise zur Vernetzung ausreichende Strahlungsdosis bei UV-Härtung liegt im Bereich von 80 bis 5000 mJ/cm².

Die Bestrahlung kann gegebenenfalls auch unter Ausschluss von Sauerstoff, z.B. unter InertgasAtmosphäre oder Sauerstoff-reduzierter Atmosphäre durchgeführt werden. Als Inertgase eignen sich bevorzugt Stickstoff, Kohlendioxid, Edelgase oder Verbrennungsgase. Des weiteren kann die Bestrahlung erfolgen, indem die Beschichtung mit für die Strahlung transparenten Medien abgedeckt wird. Beispiele hierfür sind z.B. Kunststofffolien, Glas oder Flüssigkeiten wie Wasser.

Je nach Strahlungsdosis und Aushärtungsbedingungen sind Typ und Konzentration des gegebenenfalls verwendeten Initiators in dem Fachmann bekannter Weise zu variieren.

Besonders bevorzugt werden zur Härtung Quecksilberhochdruckstrahler in ortsfesten Anlagen eingesetzt. Fotoinitiatoren werden dann in Konzentrationen von 0,1 bis 10 Gew.-%, besonders bevorzugt 0,2 bis 3,0 Gew.-% bezogen auf den Festkörper der Beschichtung eingesetzt. Zur Härtung dieser Beschichtungen wird bevorzugt eine Dosis von 200 bis 3000 mJ/cm² gemessen im Wellenlängebereich von 200 bis 600 nm verwendet.

Das erfindungsgemäße Beschichtungsmittel härtet weiterhin durch Einwirkung von thermischer Energie. Die thermische Energie kann dabei durch Strahlung, Wärmeleitung und/oder Konvektion in die Beschichtung eingebracht werden, wobei üblicherweise die in der Beschichtungstechnologie gebräuchlichen Infrarot-Strahler, Nahinfrarotstrahler und/oder Öfen zum Einsatz kommen. Durch die Zuführung thermischer Energie wird die Vernetzungsreaktion der cyclischen Ketongruppen mit den Isocyanat-reaktiven Gruppen des Beschichtungsmittels ausgelöst.

Da durch die Einwirkung aktinischer Strahlung und die Erzeugung thermischer Energie zwei unabhängige chemische Mechanismen in Gang gesetzt werden, kann die Reihenfolge aktinische Strahlung/thermische Energie und damit die Reihenfolge, in der die Mechanismen ablaufen, beliebig kombiniert werden. Bevorzugt wird zunächst gegebenenfalls vorhandenes organisches Lösungsmittel und/oder Wasser mit den in der Beschichtungstechnologie üblichen Methoden entfernt. In einer bevorzugten Variante wird anschließend zunächst durch Einwirkung aktinischer Strahlung ganz oder teilweise gehärtet. Unmittelbar danach oder auch später sowie an der räumlich gleichen oder getrennter Stelle kann die thermische Härtung erfolgen. Es ist so zum Beispiel möglich zunächst flexible Beschichtungen zu erzeugen, die eine Verformung des Substrats schadlos überstehen und diese anschließend thermisch weiter zu härten. Es ist so zum Beispiel möglich, ggf. bereits beschichtetes Metall in Form sogenannter Coils zu beschichten und die Beschichtungen zunächst durch Einwirkung von aktinischer Strahlung zu einer flexiblen Beschichtung zu härten. Aus den beschichteten Coils können dann bestimmte Teile durch dem Fachmann bekannte Verfahren wie z.B. Stanzen herausgelöst und mechanisch in eine neue Form gebracht werden, ohne dass die Beschichtung Schaden nimmt und z.B. reißt. Anschließend wird durch thermische Energie die Vernetzungsreaktion der cyclischen Ketongruppen mit den Isocyanat-reaktiven Gruppen des Beschichtungsmittels ausgelöst, so dass sehr beständige Beschichtungen entstehen, die sich beispielsweise auch als Klarlacke für Automobilkarosserien oder für im Automobilbau verwendete Teile eignen.

In einer weiteren Variante wird zunächst eine Kunststofffolie beschichtet und die Beschichtung durch aktinische Strahlung zu einer blockfesten, aber elastischen Schicht gehärtet. Diese Folie kann später über ein Formteil gezogen und damit verklebt werden. Dieses sogenannte Tiefziehen erfolgt bevorzugt bei erhöhten Temperaturen, wobei während des Ziehvorgangs, an dessen Ende und/oder nach dem Ziehvorgang diejenige Temperatur erreicht wird, die zur Vernetzung der cyclischen Ketongruppen mit den Isocyanat-reaktiven Gruppen des Beschichtungsmittels notwendig ist, so dass die Beschichtung zu einer hochbeständigen Schicht vernetzt.

In einer weiteren Variante ist es auch möglich, zunächst durch thermische Energie zu vernetzen und anschließend die Oberflächen des so entstandenen beschichteten Substrats oder des nur aus dem erfmdungsgemäßen Beschichtungsmittel bestehenden Teils durch Einwirken von aktinischer Strahlung bei Temperaturen von 0 bis 300°C, bevorzugt 23 bis 200°C, insbesondere von 80 bis 150°C weiter zu vernetzen. Insbesondere kann es vorteilhaft sein, das dem Fachmann als In-Mould-Coating bekannte Verfahren der thermischen Härtung von Beschichtungen mit einer nachträglichen Vernetzung durch aktinische Strahlung außerhalb der Form zu kombinieren.

### Beispiele:

Alle Prozentangaben sind, soweit nicht anders vermerkt, als Gewichtsprozent (Gew.-%) zu verstehen.

**Desmodur^{®} N3300:** HDI-Polyisocyanat mit Isocyanuratstruktur, NCO-Gehalt 21,8 %, Viskosität 3000 mPas/23°C, Bayer AG, Leverkusen, DE

**Desmodur^{®} XP 2410:** Polyisocyanat auf der Basis eines Hexamethylendiisocyanat Trimers mit Isocyanurat- und Iminooxadiazindion-Struktureinheiten, NCO-Gehalt 23,0 Gew.%, Viskosität 700 mPas/23°C, Bayer AG, Leverkusen, **DE.Baymicron^{®} OXA WM 06:** oligomers Polyisocyanat vorwiegend mit Oxadiazintrion-Struktureinheiten aus Hexamethylendiisocyanat und Kohlendioxid, NCO-Gehalt: 20,2 - 20,7 %, Bayer AG, Leverkusen, DE.

Der Gehalt freier NCO-Gruppen wurde durch Titration gemäß DIN EN ISO 11909 (Titration mit Dibutylamin) bestimmt.

Die Viskositäten wurden bei 23°C mit einem Rotationsviskosimeter (ViscoTester^{®} 550 sowie Haake PK 100, Thermo Haake GmbH, D-76227 Karlsruhe) bestimmt.

Zur Aufnahme der IR-Spektren wurde ein Messgerät vom Typ Paragon 1000 FT-IR der Firma Perkin Elmer verwendet. Die Proben wurden zwischen handelsüblichen NaCl Platten ohne weitere Vedünnung vermessen.

### Beispiel 1:

### Blockiertes acrylatgruppenhaltiges Polyisocyanat

In einem 250 ml Dreihalskolben mit mechanischer Rührung und Innenthermometer wurden 11,61 g (0,1 val) Hydroxyethylacrylat, 31,86 g (0,204 val) Cyclopentanon-2-carboxyethylester und 59,1 g (0,3 val) Desmodur^{®} N3300, 103 mg Zink-2-ethylhexanoat sowie 103 mg 2,6-Ditertbutyl-4-methylphenol in 25,6 g Butylacetat zusammengegeben (Festkörpergehalt 80%) und so lange 35°C gerührt, bis der NCO-Gehalt auf 0 % gefallen war, nachweisbar durch Abnahme der Bande bei 2260 cm⁻¹ (Bande für Isocyanatgruppen) im IR-Spektrum. Der Gehalt blockierter NCO-Gruppen der Mischung betrug 6,68 %. Die Viskosität betrug 4000 mPas.

### Beispiel 2:

### Blockiertes acrylatgruppenhaltiges Polyisocyanat

In einem 500 ml Dreihalskolben mit mechanischer Rührung und Innenthermometer wurden 15,48 g (0,133 val) Hydroxyethylacrylat, 69,72 g (0,275 val) Cyclopentanon-2-carboxyethylester und 174,3 g (0,4 val) Desmodur^{®} XP 2410, 86 mg Zink-tetramethylheptadionat sowie 128 mg 2,6-Ditertbutyl-4-methylphenol zusammengegeben und bei 35°C so lange gerührt, bis der NCO-Gehalt auf 0 % gesunken war, nachweisbar durch Abnahme der Bande bei 2260 cm⁻¹ (Bande für Isocyanatgruppen) im IR-Spektrum. Der Gehalt blockierter NCO-Gruppen betrug 9,0 % und die Viskosität des so erhaltenen Produktes betrug 200.000 mPas.

### Beispiel 3:

### Blockiertes acrylatgruppenhaltiges Polyisocyanat

In einem 1000 ml Dreihalskolben wurden 58,06 g (0,5 val) Hydroxyethylacrylat, 295,5 g (1,5 val) Desmodur^{®} N3300 und 159,32 g (1,02 val) Cyclopentanon-2-carboxyethylester in 128,22 g Butylacetat mit 256 mg Zinkacetylaceton sowie 513 mg 2,6-Ditertbutyl-4-methylphenol gegeben (Festkörpergehalt 80%) und so lange bei 35°C gerührt, bis der NCO-Gehalt auf 0 % gesunken war, nachweisbar durch Abnahme der Bande bei 2260 cm⁻¹ (Bande für Isocyanatgruppen) im IR-Spektrum. Der Gehalt blockierter NCO-Gruppen des Produktes betrug 6,68 %, die Viskosität 2800 mPas.

### Beispiel 4:

### Blockiertes acrylatgruppenhaltiges Polyisocyanat

In einem 250 mL Dreihalskolben mit Rückflusskühler wurden 42,90g (0,2 val) Baymicron^{®} OXA WM 06 (214,5 g/val NCO) und 0,043g Zink-2-ethylhexanoat miteinander vermischt und auf 40°C aufgeheizt. Anschließend wurden 31,86 g (0,204 mol) Cyclopentanon-2-carboxyethylester (156,2 g/mol) innerhalb 30 Minuten zugetropft und für 14 Stunden bei 40°C nachgerührt, so dass keine freien NCO-Gruppen mehr nachweisbar waren. Danach wurden unter Rühren nacheinander 0,086 g Triethylamin, 0,259 g 2,6-Ditertbutyl-4-methylphenol und 11,6 g (0,1 val) Hydroxyethylacrylat hinzugegeben, wobei leichte Gasentwicklung beobachtet wurde. Zur Vervollständigung der Reaktion wurde in regelmäßigen Abständen Vakuum anlegt. Nach 10 Stunden Rührzeit war die Reaktion abgeschlossen, nachweisbar durch Abnahme der Bande bei 1825 cm⁻¹ (Bande für Oxadiazintrion) im IR-Spektrum. Der Gehalt blockierter NCO-Gruppen des Produktes betrug 10,3 % und die Viskosität lag über 100.000 mPas.

### Beispiel 5:

### Blockiertes acrylatgruppenhaltiges Polyisocyanat

In einem 250 mL Dreihalskolben mit Rückflusskühler wurden 42,90 g (0,2 val) Baymicron^{®} OXA WM 06 (214,5 g/val NCO) und 0,043 g Zinkacetylacetonat vermischt und auf 40°C aufgeheizt. Anschließend wurden 23,90 g (0,153 val) Cyclopentanon-2-carboxyethylester (156,2 g/mol) innerhalb 30 Minuten zugetropft und für 14 Stunden nachgerührt, so dass keine freien NCO-Gruppen mehr nachweisbar waren. Anschließend wurden nacheinander 0,084 g Triethylamin, 0,253 g 2,6-Ditertbutyl-4-methylphenol und 17,4 g (0,15 val) Hydroxyethylacrylat zugegeben, wobei es zu einer gemäßigten Gasentwicklung kam. Es wurde 14 h nachgerührt, wobei zur Vervollständigung der Reaktion regelmäßig Vakuum anlegt wurde. Die Reaktion war danach abgeschlossen, nachweisbar durch Abnahme der Bande bei 1825 cm⁻¹ (Bande für Oxadiazintrion) im IR-Spektrum. Der Gehalt blockierter NCO-Gruppen des auf diese Weise erhaltenen Produktes betrug 7,9 % und die Viskosität lag über 100.000 mPas.

### Beispiel 6:

### Blockiertes acrylatgruppenhaltiges Polyisocyanat

In einem 250 mL Dreihalskolben mit Rückflusskühler wurden 42,90 g (0,2 val) Baymicron OXA 06 (214,5 g/val NCO) und 0,039g Zink-2-ethylhexanoat vermischt. Bei einer Temperatur von maximal 40°C wurden 15,93 g (0,102 val) Cyclopentanon-2-carboxyethylester (156,2 g/mol) langsam zugetropft. Nach 30 Minuten war das Zutropfen abgeschlossen. Nach ca. 14 Stunden Nachrührzeit wurden 0,078 g Triethylamin und 0,233g 2,6-Ditertbutyl-4-methylphenol zugeben, gefolgt von 23,2 g (0,2 val) Hydroxyethylacrylat. Es erfolgte eine gemäßigte Gasentwicklung. Durch regelmäßigs Anlegen von Vakuum wurde die Reaktion vervollständigt. Nach 14 Stunden Rührzeit war die Reaktion beendet, nachweisbar durch Abnahme der Bande bei 1825 cm⁻¹ (Bande für Oxadiazintrion) im IR-Spektrum. Der Gehalt blockierter NCO-Gruppen des Produktes betrug 5,41%. Die Viskosität betrug etwa 100.000 mPas.

### Beispiel 7:

### Blockiertes Polyisocyanat

In einem 500 mL Dreihalskolben mit Rückflusskühler wurden unter Stickstoffatmosphäre 104,6g (1,0 Val) Desmodur XP 2410 (Bayer AG, Leverkusen, 174,3g/val) und 0,099 g Zinktetramethylheptadionat 10 Minuten lang vermischt. Bei einer Temperatur von 40°C wurden 93,7g (1,0 Val) Cyclopentanon-2-carboxyethylester (156,2 g/val) hinzu zugetropft. Nach 30 Minuten war das Zutropfen abgeschlossen. Man liess bei einer Temperatur von 40°C rühren, bis der NCO-Gehalt 0 % betrug, nachweisbar durch Abnahme der Bande bei 2260 cm⁻¹ (Bande für Isocyanatgruppen) im IR-Spektrum. Der blockierte NCO-Gehalt betägt 12,71 %, die Viskosität betrug > 100.000 mPas.

### Beispiel 8:

### Hydrophiliertes, blockiertes Polyisocyanat mit Acrylat- und Methacrylatgruppen:

In einem 500 mL Dreihalskolben mit Rückflusskühler wurden 97,50 g (0,5 val) Desmodur N 3300 (195 g/val), 47,75 g eines Adduktes von Glycidylmethacrylat und Acrylsäure (1:1) der Hydroxylzahl 235 mg KOH/g, 5,90 g (0,05 val) Hydroxypivalinsäure (118 g/val), 0,19 g 2,6-Ditertbutyl-4-methylphenol, 0,76 mg Zinn-2-ethylhexanoat und 47,55 g Methylethylketon vermischt. Man ließ bei einer Temperatur von 60°C 14 Stunden reagieren, bis der theoretische NCO Wert von 5,28% um 0,1% leicht unterschritten war. Danach wurden bei 65°C 0,19 g Zink-2-ethylhexanoat hinzugegeben und 10 Minuten vermischt. Daraufhin wurden 39,05g (0,25 val) Cyclopentanon-2-carboxyethylester (156,2 g/mol) langsam hinzu getropft. Nach 30 Minuten war das Zutropfen abgeschlossen. Nach 16 Stunden Nachrührzeit betrug der NCO-Gehalt 0 %, nachweisbar durch Abnahme der Bande bei 2260 cm⁻¹ (Bande für Isocyanatgruppen) im IR-Spektrum. Das Produkt hat einen blockierten NCO-Gehalt von 4,41% und eine Viskosität von 4220 mPas.

### Beispiel 9:

### Acrylathaltiges, blockiertes Polyisocyanat

In einem 250 mL Dreihalskolben mit Rückflusskühler wurden 59,10g (0,3 Val) Desmodur N 3300 (197 g/val), 0,103g 2,6-Ditertbutyl-4-methylphenol, 25,64g Butylacetat und 0,051 g Zink-2-ethyl-hexanoat 10 Minuten lang vermischt. Bei einer Temperatur von max. 40°C wurden 31,86g (0,204 Val) Cyclopentanon-2-carboxyethylester (156,2 g/val) und 11,61 g (0,1 Val) Hydroxyethylacrylat (116,12 g/val) hinzu getropft. Nach ca. 30 Minuten war das Zutropfen abgeschlossen. Man liess bei einer Temperatur von 40°C rühren, bis der Ansatz einen NCO-Gehalt von = % hatte, nachweisbar durch Abnahme der Bande bei 2260 cm⁻¹ (Bande für Isocyanatgruppen) im IR-Spektrum. Das Produkt hat einen Festkörpergehalt von 80% und einen blockierten NCO-Gehalt von 6,68%. Die Viskosität betrug 4000 mPas.

### Beispiel 10:

### Beschichtungsmittel und Beschichtungen

Jeweils 5,52 g des in Beispiel 9 erhaltenen Produkts wurden mit den in der Tabelle angegeben Mengen vermischt. Desmophen^{®} A870 ist ein hydroxylgruppenhaltiges Polyacrylat, 70%ig in Butylacetat (Bayer AG, Leverkusen, DE). PETIA ist ein acryliertes Pentaerythrit mit einem OH-Gehalt von 30 mg KOH/g (UCB GmbH, Kerpen, DE). Darocur^{®} 1173 ist ein Fotoinitiator (Ciba Spezialitätenchemie GmbH, Lampertheim, DE). Zinkethylhexanoat wurde 50 %ig in Butylacetat gelöst. Alle Angaben in [g].

| | Desmophen^{®} A870 | PETIA | Darocur^{®} 1173 | Zinkethylhexanoat, 50%ig | Butylacetat |
|---|---|---|---|---|---|
| 10a | - | - | 0,17 | 0,033 | 1,38 |
| 10b | - | 4,82 | 0,31 | 0,062 | 2,59 |
| 10c | 5,76 | - | 0,34 | 0,068 | 2,82 |
| 10d | 4,61 | 0,96 | 0,33 | 0,067 | 2,77 |
| 10e | 4,03 | 1,44 | 0,33 | 0,066 | 2,75 |

Die Beschichtungsmittel 10a) bis 10e) wurden mit einem knochenförmigen 100 µm Handrakel auf Glasplatten aufgezogen. Alle Beschichtungen wurden bei 50°C im Trockenschrank 15 min von Lösemittel befreit und anschliessend mit einem UV-Strahler bei 1500 mJ/cm² gehärtet (CK-Strahler, 80 W/cm, IST Strahlentechnik, Nürtingen, DE). Nach 60 Minuten bei Raumtemperatur wurde die Pendelhärte nach König bestimmt. Anschließend wurden alle Beschichtungen 20 Minuten bei 140°C weiter gehärtet. Nach 60 Minuten bei Raumtemperatur wurde erneut die Pendelhärte nach König bestimmt.

| | Pendelhärte nach UV | Pendelhärte nach UV und 140°C |
|---|---|---|
| 10a | 13s s | 122 s |
| 10b | 158 s | 186 s |
| 10c | 11 s | 154 s |
| 10d | 23 s | 160 s |
| 10e | 28 s | 162 s |

Analog der Beispiele 10 a) - e) wurden jeweils 10,60 g des in Beispiel 1 erhaltenen Produkts mit den in der Tabelle angegeben Mengen in [g] vermischt.

| | Desmophen^{®} A870 | PETIA | Darocur^{®} 1173 | Zinkethylhexanoat 50%ig | Butylacetat |
|---|---|---|---|---|---|
| 10f | - | - | 0,32 | 0,064 | 2,65 |
| 10g | - | 4,82 | 0,46 | 0,093 | 3,86 |
| 10h | 5,76 | - | 0,49 | 0,098 | 4,09 |
| 10i | 4,61 | 0,96 | 0,49 | 0,097 | 4,04 |
| 10k | 4,03 | 1,44 | 0,48 | 0,096 | 4,02 |

Die Beschichtungsmittel 10 f) bis 10k) wurden analog 10a) bis 10e) appliziert und gehärtet.

| | Pendelhärte nach UV | Pendelhärte nach UV und 140°C |
|---|---|---|
| 10f | 82 s | 188 s |
| 10g | 167 s | 190 s |
| 10h | 35 s | 180 s |
| 10i | 69 s | 151 s |
| 10k | 85 s | 162 s |

Analog der Beispiele 10 a) - e) wurden jeweils 16,52 g des in Beispiel 7 erhaltenen Produkts mit den in der Tabelle angegeben Mengen in [g] vermischt. Laromer^{®} PE 44F ist ein Polyesteracrylat mit einem OH-Gehalt von 77 mg KOH/g (BASF AG, Ludwigshafen, DE). Ebecryl^{®} 600 ist ein aromatisches Epoxyacrylat mit einem OH-Gehalt von 225 mg KOH/g (UCB GmbH, Kerpen, DE).

| | A = Laromer^{®} PE44F | PETIA | Darocur^{®} 1173 | Zinkethylhexanoat 50%ig | Butylacetat |
|---|---|---|---|---|---|
| | B = Ebecryl^{®} 600 | | | | |
| | C = Desmophen^{®} A870 | | | | |
| 10l | 35,32 (A) | - | 1,55 | 0,310 | 2,65 |
| 10m | 12,41 (B) | - | 0,87 | 0,174 | 3,86 |
| 10n | 28,80 (C) | 11,33 | 1,10 | 0,220 | 4,09 |

Die Beschichtungsmittel 101) bis 10 n) wurden analog 10 a) bis 10 e) appliziert und gehärtet.

| | Pendelhärte nach UV | Pendelhärte nach UV und 140 °C |
|---|---|---|
| 10l | 23 s | 45 s |
| 10m | 16 s | 63 s |
| 10n | 59 s | 76 s |

Hiermit konnte gezeigt werden, dass die Beschichtungsmittel mit zwei unabhängigen Mechanismen aushärten. Die in der Lacktechnik erwarteten Anforderungen werden mit diesem System, das Abspalter frei reagiert, erfüllt.

### Beispiel 11:

### Beschichtungsmittel und Beschichtung

62,7 g des Polyisocyanats nach Beispiel 3 wurden mit 60,7 g des hydroxyfunktionellen Polyesters Desmophen® T XP 2374 (80 %-ig in Butylacetat/Isobutanol 9:1, Bayer AG, Leverkusen, DE), 28,6 g Butylacetat, 2,0 g Irgacure® 184 (Fotoinitiator, Ciba Spezialitätenchemie GmbH, Lampertheim, DE), 1,0 g Lucirin® TPO (Fotoinitiator, BASF AG, Ludwigshafen, DE) sowie 0,5 g Byk^{®} 306 (Verlaufshilfsmittel, Byk-Chemie, Wesel, DE) intensiv vermischt. Dieses Beschichtungsmittel wurde mit einem Spiralrakel auf ein Aluminiumblech mit einer resultierenden Trockenfilmdicke von 50 µm aufgezogen. Es wurde 10 Minuten bei 80°C abgelüftet, anschließend mit 1500 mJ/cm² (1 CK-Strahler 80 W/cm) UV gehärtet und dann 20 Minuten bei 140°C thermisch gehärtet. Nach Abkühlen konnte das Blech um einen Dom mit 1 cm Durchmesser gebogen werden, ohne das die Beschichtung riss.

### Beispiel 12:

### Herstellung einer Dispersion bzw. eines Pulver-Slurry

In einem 500 mL Dreihalskolben mit mechanischem Rührer wurde eine Mischung aus 100 g Bayhydrol® VP LS 2235 (Hydroxylgruppen-haltige Polyacrylatdispersion, Festgehalt ca. 45%, Hydroxylgehalt 3,3%, Bayer AG, Leverkusen, DE), 100 g Bayhydrol^{®} UV VP LS 2282 (Urethanacrylatdispersion, Festgehalt ca. 39%, frei von OH-Gruppen (Bayer AG, Leverkusen, DE), 0,3 g Ethyldiisopropylamin, 80 g Wasser sowie 46,8 g des in Beispiel 8 Polyisocyanats wurden in dieser Reihenfolge nacheinander unter intensivem Rühren zusammengegeben. Nach 30 min Rühren wurde bei 40°C und auf 23 mbar reduziertem Druck Methylethylketon (Colöser) aus der Dispersion abdestilliert. Anschließend wurden 3,2 g Irgacure^{®} 500 (Fotoinitiator, Ciba Spezialitätenchemie GmbH, Lampertheim, DE) eingerührt. Das resultierende Beschichtungsmittel hatte einen Festgehalt von 40,1 % und eine Auslaufviskosität von 18 s im DIN4-Becher.

## Patentansprüche

1. Organische Polyisocyanate, die mindestens eine ungesättigte funktionelle Gruppe aufweisen, die unter Einwirkung aktinischer Strahlung mit ethylenisch ungesättigten Verbindungen unter Polymerisation reagiert und Struktureinheiten der Formel (1) 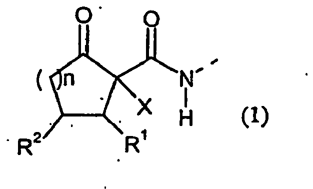 aufweisen, in welcher
X eine elektronenziehende Gruppe ist,
R¹, R² unabhängig voneinander ein Wasserstoffatom, ein gesättigter oder ungesättigter aliphatischer oder cycloaliphatischer, ein gegebenenfalls substituierter aromatischer oder araliphatischer Rest sind und je bis zu 12 Kohlenstoffatome und gegebenenfalls bis zu 3 Heteroatome der Elemente Sauerstoff, Schwefel, Stickstoff enthalten und gegebenenfalls durch Halogenatome substituiert sind und
n eine ganze Zahl von 0 bis 5 ist.

2. Polyisocyanate nach Anspruch 1 **dadurch gekennzeichnet, dass** die elektronenziehende Gruppe X eine Ester-, Sulfoxid-, Sulfon-, Nitro-, Phosphonat-, Nitril-, Isonitril- oder Carbonylgruppe ist.

3. Verfahren zur Herstellung der Polyisocyanate nach Anspruch 1 oder 2, bei dem
A1) ein oder mehrere organische Polyisocyanate mit
A2) einer oder mehreren Verbindungen, die mindestens eine isocyanatreaktive Gruppe aufweisen und mindestens eine unter Einwirkung aktinischer Strahlung mit ethylenisch ungesättigten Verbindungen unter Polymerisation reagierende Gruppe enthalten,
A3) ggf. weiteren isocyanatreaktiven Verbindungen und
A4) Blockierungsmitteln enthaltend mindestens ein CH-azides cyclisches Keton der allgemeinen Formel (2), 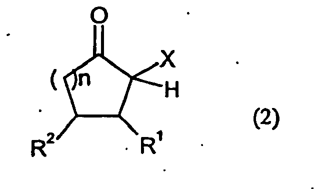 in welcher
X eine elektronenziehende Gruppe ist,
R¹, R² unabhängig voneinander ein Wasserstoffatom, ein gesättigter oder ungesättigter aliphatischer oder cycloaliphatischer, ein gegebenenfalls substituierter aromatischer oder araliphatischer Rest sind und je bis zu 12 Kohlenstoffatome und gegebenenfalls bis zu 3 Heteroatome der Elemente Sauerstoff, Schwefel, Stickstoff enthalten und gegebenenfalls durch Halogenatome substituiert sind und
n eine ganze Zahl von 0 bis 5 ist,
A5) in Anwesenheit eines oder mehrerer Katalysatoren und
A6) ggf. Hilfs- und Zusatzstoffen sowie
A7) ggf. Lösemitteln
miteinander umgesetzt werden.

4. Verwendung der Polyisocyanate nach Anspruch 1 oder 2 zur Herstellung von Lacken, Beschichtungen, Schlichten, Klebstoffen und Formkörpern.

5. Beschichtungsmittel enthaltend
B1) ein oder mehrere Polyisocyanate nach Anspruch 1 oder 2 und
B2) ein oder mehrere organische Polyisocyanate, die Struktureinheiten der Formel (1) 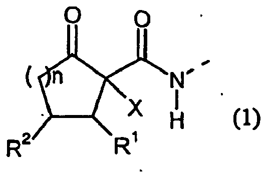 aufweisen, in welcher
X eine elektronenziehende.Gruppe ist,
R¹, R² unabhängig voneinander ein Wasserstoffatom, ein gesättigter oder ungesättigter aliphatischer oder cycloaliphatischer, ein gegebenenfalls substituierter aromatischer oder araliphatischer Rest sind und je bis zu 12 Kohlenstoffatome und gegebenenfalls bis zu 3 Heteroatome der Elemente Sauerstoff, Schwefel, Stickstoff enthalten und gegebenenfalls durch Halogenatome substituiert sind und
n eine ganze Zahl von 0 bis 5 ist,
B3) ein oder mehrere Verbindungen, die mindestens eine isocyanatreaktive Gruppe aufweisen und ggf. eine oder mehrere funktionelle Gruppen enthalten, die unter Einwirkung aktinischer Strahlung mit ethylenisch ungesättigten Verbindungen unter Polymerisation reagieren,
B4) ggf. Verbindungen, die funktionelle Gruppen tragen, die durch Einwirkung aktinischer Strahlung mit ethylenisch ungesättigten Verbindungen unter Polymerisation reagieren und die weder NCO-Gruppen noch NCO-reaktive Gruppen aufweisen,
B5) ggf. Katalysatoren und
B6) ggf. Hilfs- und Zusatzstoffe
B7) ggf. Produkte aus Reaktionen der Komponenten B1) bis B6) untereinander.

6. Verfahren zur Herstellung der Beschichtungsmittel nach Anspruch 5 durch Vermischen der Komponenten B1) bis B6).

7. Beschichtungen erhältlich aus Beschichtungsmitteln nach Anspruch 5.

8. Substrate beschichtet mit Beschichtungen nach Anspruch 7.

## Claims

1. Organic polyisocyanates which have at least one unsaturated functional group which on exposure to actinic radiation reacts, with polymerization, with ethylenically unsaturated compounds, and which have structural units of the formula (1) 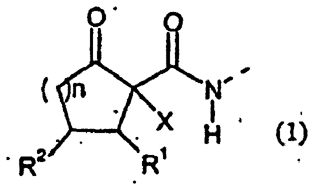 in which
X is an electron-withdrawing group,
R¹ and R² independently of one another are a hydrogen atom or a saturated or unsaturated aliphatic or cycloaliphatic or an optionally substituted aromatic or araliphatic radical and each contain up to 12 carbon atoms and optionally up to 3 heteroatoms of the elements oxygen, sulphur and nitrogen, and are optionally substituted by halogen atoms, and
n is an integer from 0 to 5.

2. Polyisocyanates according to Claim 1, **characterized in that** the electron-withdrawing group X is an ester, sulphoxide, sulphone, nitro, phosphonate, nitrile, isonitrile or carbonyl group.

3. Process for preparing the polyisocyanates according to Claim 1 or 2, in which
A1) one or more organic polyisocyanates are reacted with
A2) one or more compounds which have at least one isocyanate-reactive group and contain at least one group which on exposure to actinic radiation reacts, with polymerization, with ethylenically unsaturated compounds,
A3) optionally further isocyanate-reactive compounds and
A4) blocking agents comprising at least one CH-acidic cyclic ketone of the general formula (2) 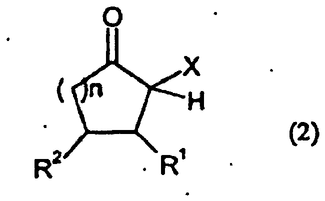 in which
X is an electron-withdrawing group,
R¹ and R² independently of one another are a hydrogen atom or a saturated or unsaturated aliphatic or cycloaliphatic or an optionally substituted aromatic or araliphatic radical and each contain up to 12 carbon atoms and optionally up to 3 heteroatoms of the elements oxygen, sulphur and nitrogen, and are optionally substituted by halogen atoms, and
n is an integer from 0 to 5,
A5) in the presence of one or more catalysts and
A6) optionally auxiliaries and additives and also
A7) optionally solvents
with one another.

4. Use of the polyisocyanates according to Claim 1 or 2 for producing paints, coatings, sizes, adhesives and mouldings.

5. Coating compositions comprising
B1) one or more polyisocyanates according to Claim 1 or 2 and
B2) one or more organic polyisocyanates which have structural units of the formula (1) 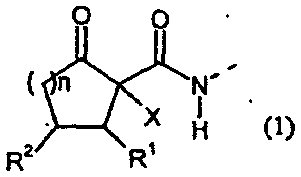 in which
X is an electron-withdrawing group,
R¹ and R² independently of one another are a hydrogen atom or a saturated or unsaturated aliphatic or cycloaliphatic or an optionally substituted aromatic or araliphatic radical and each contain up to 12 carbon atoms and optionally up to 3 heteroatoms of the elements oxygen, sulphur and nitrogen, and are optionally substituted by halogen atoms, and
n is an integer from 0 to 5,
B3) one or more compounds which have at least one isocyanate-reactive group and optionally contain one or more functional groups which on exposure to actinic radiation react, with polymerization, with ethylenically unsaturated compounds,
B4) optionally compounds which carry functional groups which by exposure to actinic radiation react, with polymerization, with ethylenically unsaturated compounds and which have neither NCO groups nor NCO-reactive groups,
B5) optionally catalysts and
B6) optionally auxiliaries and additives
B7) optionally products from reactions of components B1) to B6) with one another.

6. Process for producing the coating compositions according to Claim 5 by mixing components B1) to B6).

7. Coatings obtainable from coating compositions according to Claim 5.

8. Substrates coated with coatings according to Claim 7.

## Revendications

1. Polyisocyanates organiques, qui présentent au moins un groupe fonctionnel insaturé, qui réagit avec polymérisation sous l'effet d'un rayonnement actinique avec des composés éthyléniquement insaturés et des unités structurelles de formule (1) 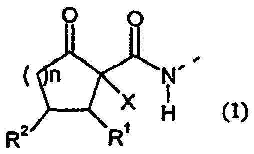 dans laquelle
X est un groupe attracteur d'électrons,
R¹, R² indépendamment l'un de l'autre, représentent un atome d'hydrogène, un radical saturé ou insaturé, aliphatique ou cycloaliphatique, ou un radical aromatique ou araliphatique le cas échéant substitué et comprennent chacun jusqu'à 12 atomes de carbone et le cas échéant jusqu'à 3 hétéroatomes parmi les éléments oxygène, soufre, azote et sont le cas échéant substitués par des atomes d'halogène et
n vaut un nombre entier de 0 à 5.

2. Polyisocyanates selon la revendication 1, **caractérisés en ce que** le groupe attracteur d'électrons X est un groupe ester, sulfoxyde, sulfone, nitro, phosphonate, nitrile, isonitrile ou carbonyle.

3. Procédé pour la préparation des polyisocyanates selon la revendication 1 ou 2, dans lequel on transforme les uns avec les autres
A1) un ou plusieurs polyisocyanates organiques avec
A2) un ou plusieurs composés, qui présentent au moins un groupe réactif avec isocyanate et au moins un groupe réagissant avec polymérisation sous l'effet d'un rayonnement actinique avec des composés éthyléniquement insaturés,
A3) le cas échéant d'autres composés réactifs avec isocyanate
A4) des agents de blocage contenant au moins une cétone cyclique CH-acide de formule générale (2), 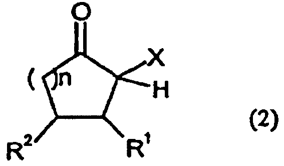 dans laquelle
X est un groupe attracteur d'électrons,
R¹, R² indépendamment l'un de l'autre, représentent un atome d'hydrogène, un radical saturé ou insaturé, aliphatique ou cycloaliphatique, ou un radical aromatique ou araliphatique le cas échéant substitué et comprennent chacun jusqu'à 12 atomes de carbone et le cas échéant jusqu'à 3 hétéroatomes parmi les éléments oxygène, soufre, azote et sont le cas échéant substitués par des atomes d'halogène et
n vaut un nombre entier de 0 à 5,
A5) en présence d'un ou de plusieurs catalyseurs et
A6) le cas échéant des adjuvants et des additifs ainsi que
A7) le cas échéant des solvants.

4. Utilisation des polyisocyanates selon la revendication 1 ou 2 pour la préparation de laques, de revêtements, de colles, d'adhésifs et de corps façonnés.

5. Agents de revêtement, contenant
B1) un ou plusieurs polyisocyanates selon la revendication 1 ou 2 et
B2) un ou plusieurs polyisocyanates organiques, qui présentent des unités structurelles de formule (1) 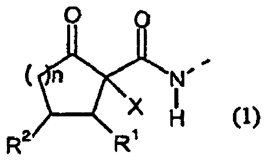 dans laquelle
X est un groupe attracteur d'électrons,
R¹, R² indépendamment l'un de l'autre, représentent un atome d'hydrogène, un radical saturé ou insaturé, aliphatique ou cycloaliphatique, ou un radical aromatique ou araliphatique le cas échéant substitué et comprennent chacun jusqu'à 12 atomes de carbone et le cas échéant jusqu'à 3 hétéroatomes parmi les éléments oxygène, soufre, azote et sont le cas échéant substitués par des atomes d'halogène et
n vaut un nombre entier de 0 à 5,
B3) un ou plusieurs composés, qui présentent au moins un groupe réactif avec isocyanate et le cas échéant un ou plusieurs groupes fonctionnels réagissant avec polymérisation sous l'effet d'un rayonnement actinique avec des composés éthyléniquement insaturés,
B4) le cas échéant des composés qui portent des groupes fonctionnels, qui réagissent avec polymérisation sous l'effet d'un rayonnement actinique avec des composés éthyléniquement insaturés et qui ne présentent pas de groupes NCO ni de groupes réactifs avec NCO
B5) le cas échéant des catalyseurs et
B6) le cas échéant des adjuvants et des additifs B7) le cas échéant des produits des réactions des composants B1) à B6) les uns avec les autres.

6. Procédé pour la préparation des agents de revêtement selon la revendication 5 par mélange des composants B1) à B6).

7. Revêtements pouvant être obtenus à partir des agents de revêtement selon la revendication 5.

8. Substrats revêtus par des revêtements selon la revendication 7.
